# EUROPEAN PATENT APPLICATION

(11) **EP 2 368 464 A1**
(43) Date of publication of application: **28.09.2011**
(21) Application number: 11157441.4
(22) Date of filing: 09.03.2011
(51) Int. Cl.: A47G 7/04, A01G 9/02, A01G 9/12

(54) **Flower holder structure**

(30) Priority: 25.03.2010 IT FI20100016 U
(71) Applicant: Bama S.p.A., 55010 Marginone, Altopascio (LU) (IT)
(72) Inventor: Baiocchi, Renzo, 55015, Montecarlo (lucca) (IT)
(74) Representative: Bardini, Marco Luigi

(57) **Abstract**

A dismountable flower holder structure (10) for household growing of plants, vegetables and flowers comprising at least two assemblies (20) each formed by a pot (20b) and saucer (20a) and arranged at different heights and in a laterally staggered manner on a support wheeled framework (11) which is reversibly coupled to said assembly through the respective saucers so as to provide a substantially "terrace" or "steps" stiff configuration.

## Description

### Field of the invention

The present invention regards the field of household articles, gardening articles, articles for growing plants, flowers, vegetables and the like at household level. More in particular, the present invention relates to a dismountable flower holder structure for both outdoors and indoor use.

### Objects and summary of the invention

The object of the present invention is to provide a flower holder structure capable of allowing housing and moving pots for growing vegetables and flowers in an easy manner.

Another object of the present invention is to provide a flower holder structure of the above mentioned type capable of being stored without occupying a lot of space when not used either by a final user or by a seller.

These and other objects, which shall be clear hereinafter, are attained through the flower holder structure according to the invention whose essential characteristics are set forth in claim 1. Other important characteristics are set forth in the dependent claims.

According to an important aspect of the invention the flower holder structure comprises at least two assemblies each formed by a flower pot and a saucer and arranged at different heights and in a laterally staggered manner on a support framework which is reversibly coupled to said assemblies through the respective saucers so as to provide a substantially "terrace" or "steps" stiff configuration.

According to another important aspect of the invention the support framework is mounted on wheels and comprises two substantially triangular-shape parallel walls with at least one inclined side along which said saucers are reversibly fixed.

### Brief description of the drawings

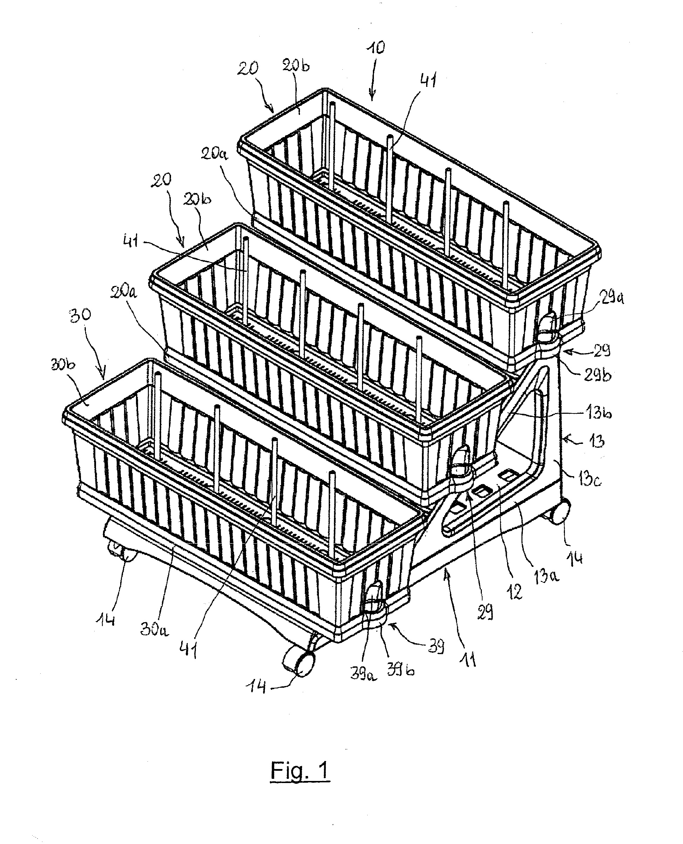

Further characteristics and advantages of the invention will be apparent from the following description of a preferred embodiment thereof, solely provided by way of non-limiting example, with reference to the attached drawings, wherein
- figure 1 is a three-quarters axonometric top view of a flower holder structure according to the invention;
- figure 2 is an exploded axonometric view of the flower holder structure of figure 1;
- figure 3 is a sectional side view, taken along arrows III-III of figure 4, of the flower holder structure of figure 1;
- figure 4 is a sectional front view, taken along arrows IV-IV of figure 3, of the flower holder structure of figure 1.

### Detailed description of an embodiment of the invention

With reference to the aforementioned figures, a flower holder structure according to the invention is generally indicated at 10.

The flower holder structure 10 comprises a framework 11 formed by a quadrilateral base 12 and two walls 13, parallel and spaced apart to each other, extending from base 12. Each wall 13 is substantially triangular-shaped, in particular triangle-rectangular-shaped in the present embodiment: a first side 13a forms the support interface on the base 12, a second side 13b is inclined in an acute manner with respect to the first side, and a third side 13c forms the vertical closure of the triangle.

The base 12 is mounted on pivoting wheels 14 which are connected, for example snap-coupled or reversible-coupled, to its lower face at the four corners thereof, said lower face being opposite to that from which the walls 13 extend. Advantageously, the base 12 is evenly perforated to lighten the structure.

The two walls 13 rise from two opposite sides of the base 12 starting from one corner and the first side 13a thereof has a length equal to about 2/3 of the length of the corresponding side of the base 12, hence one portion of said side remains free, i.e. not occupied by the wall.

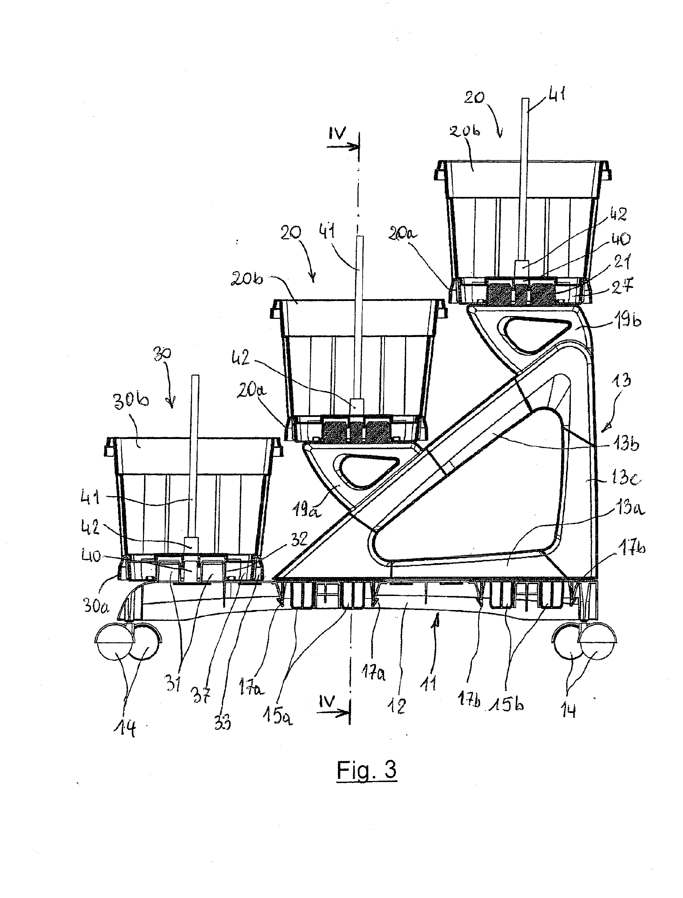

The two walls 13 are fixed to the base 12 through reversible coupling means, so as to allow dismounting the structure. In the embodiment illustrated herein, each wall 13 comprises two pairs of centring projections 15a and 15b extended from the first side 13a of the wall 13 and adapted to be simply inserted, possibly with slight interference, in corresponding seats 16a and 16b formed on the base 12. The coupling is further guaranteed by two pairs of elastically deformable teeth 17a and 17b (shown in figure 3), arranged adjacent to the lateral ends of each pair of projections 15a and 15b and adapted to be snap-engaged in corresponding undercuts 18a, 18b formed in the base 12. The projections 15a,b and the teeth 17a,b are made in a single piece with the walls 13.

Each wall 13 is further provided with two brackets 19a and 19b extending from the second side 13b, i.e. the inclined side. In particular, a first bracket 19a is provided at an intermediate position of the inclined side 13b, while the second bracket 19b is situated at the higher part of the side 13b, i.e. in proximity of the upper vertex of the wall 13.

The upper part of each bracket 19a or 19b serves for supporting and fixing a corresponding saucer 20a, of a rectangular shape, on which there is arranged a rectangular shaped pot 20b. The pot and saucer form a pot/saucer assembly 20, described in detail hereinafter.

In practice, each wall 13 is provided with two brackets 19a and 19b which are at the same height of respective brackets present on the other wall. Two saucers 20a are arranged and fixed on corresponding aligned pairs of brackets belonging to the two walls.

The fixing of each saucer 20a is achieved by a reversible coupling, so as to allow the dismounting of the assemblies 20 from the framework 11. I n this embodiment, from the flat upper part of the brackets 19 there extends a further pair of centring projections 21 adapted to be simply inserted, possibly with slight interference, in corresponding seats 22 formed on the lower face of the saucers 20a. Also in this case, coupling is guaranteed by an elastically deformable tooth 23, arranged between the projections 21 and adapted to be snap-coupled in a corresponding undercut 24 provided on the lower face of the saucer. The projections 21 and the tooth 23 are made in a single piece with the walls 13.

The saucers 20a, once fixed to the walls 13, are structural elements of the entire flower holder structure and they increase the stability of the framework.

Besides the two pot/saucer assemblies 20 fixed on the walls 13, a third assembly 30 is present comprising a saucer 30a and pot 30b, arranged directly on the front part of the base 12, i.e. the part whose sides are not occupied by the walls 13. The assembly 30 is fixed to the base 12 in a way similar to that through which the two assemblies 20 are fixed to the walls 13, i.e. through further centring projections 31/teeth 33 protruding from the base 12 and coupled with respective seats 32/ undercuts 34 obtained on the lower base of the saucer 30a.

In the example illustrated herein the three pot/saucer assemblies 20, 30 the flower holder is provided with are identical to each other. As shown in the figures, the flower holder is substantially "steps" or "terrace" configured, i.e. the pot/saucer assemblies are staggered laterally and vertically.

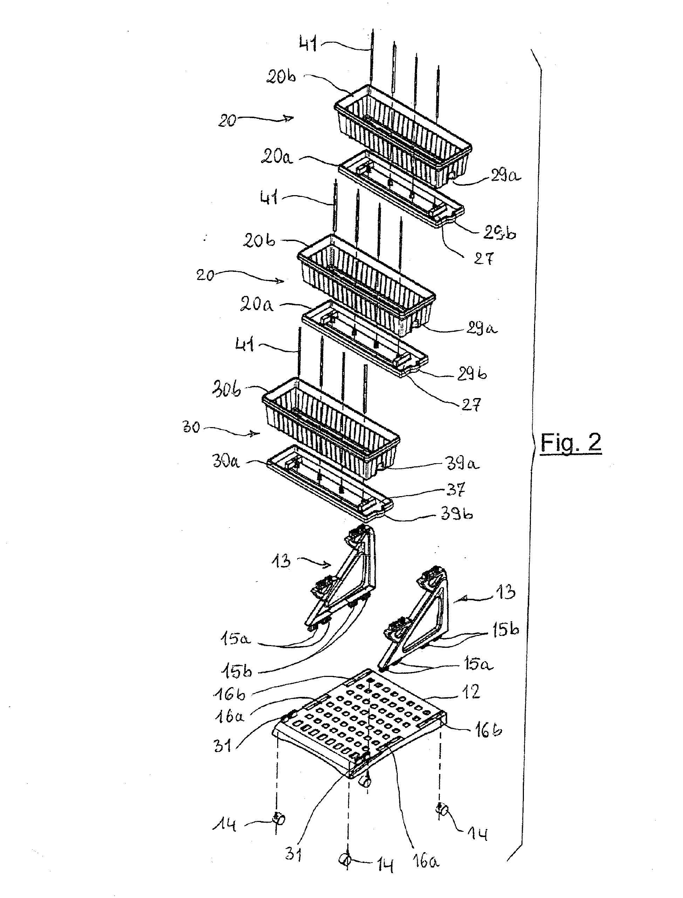

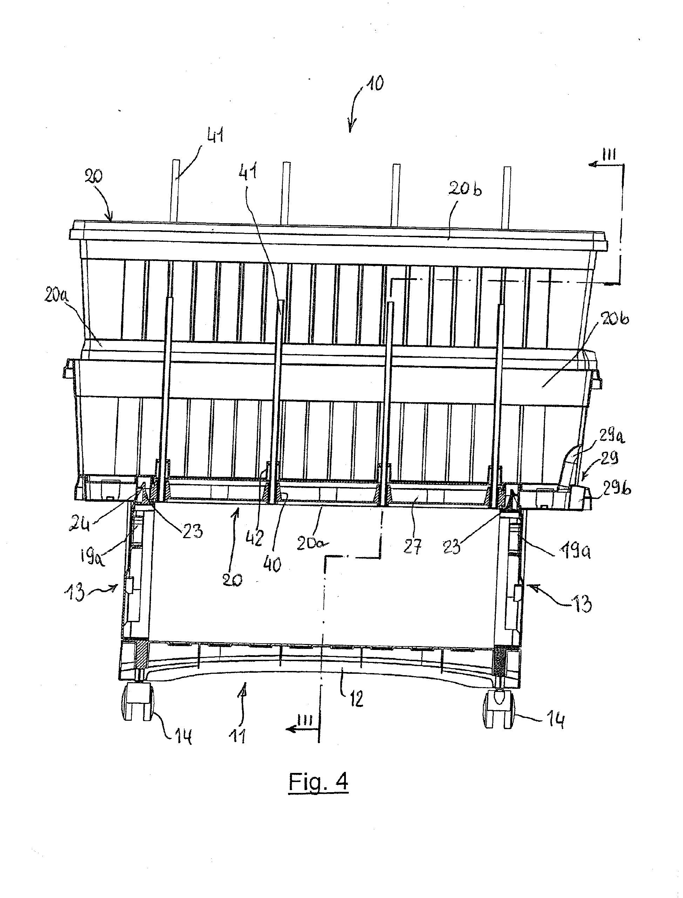

As shown in particular in figures 2 and 4, between pot 20b (30b) and saucer 20a (30a) there is defined, in a substantially known manner, an interspace 27 (37) for water. Obviously, on the bottom of the pot 20b (30b) there is a plurality of through holes or slots (not shown in the figures) for enabling water to drain from the pot to the saucer, i.e. into the interspace 27 (37) and for enabling the "recovery" of water by the soil in the pot.

Each pot/saucer assembly 20 (30) is formed also with an opening 29 (39) communicating with the interspace 27 (37) and adapted to allow watering. Such opening 29 (39) is made for example on the side of each assembly 20 (30) in proximity of one of the walls 13. In particular, the opening 29 (39) is defined by a recess 29a (39a) made on the lateral wall of the pot 20b (30b) and an underlying widening 29b (39b) of the saucers 20a (30a). With such configuration and positioning, the opening 29 (39) (see in particular figure 4), the saucers can be watered easily, for example by means of a watering can, without any hindrance by the adjacent pot/saucer assemblies.

Each pot/saucer assembly 20 (30) further comprises a plurality of housings 40 for the engagement of lower ends of corresponding support rods 41 for binding the plants planted in the pot. Such housings, and hence the respective rods, are aligned along the longitudinal centreline of each pot/saucer assembly 20 (30). In particular, each housing 40 is formed on the bottom of the saucer 20a (30a), while, at an overlying position, at the bottom of the pot 20b (30b), there is obtained an upward passage 42 for the rod 41.

As observable from the figures, the housing of the end of the rod 41 is formed by a sleeve portion projecting from the bottom of the saucer 20a (30a), while the passage 42 obtained on the bottom of the pot 20b (30b) is constituted by a tube portion aligned to the sleeve portion. Such configuration guarantees an ideal stability of the rod 41.

The base 12 and the two walls 13 are constituted by a respective single piece made of injection-moulded plastic material.

From the description provided above, it is clear that the flower holder structure according to the invention allows attaining the preset objects. In particular, due to the reversible couplings between the components thereof it can be easily dismounted, stored in very small space and mounted again to suit contingent needs. In addition, it can be reduced to a very compact form, particularly advantageous for transfer and storage. Due to the substantially triangular-shape of the walls supporting the pot/saucer assemblies, the latter are arranged according to a "steps" or "terrace" configuration, thereby providing an ideal balance between aesthetical needs and functional needs of good exposure of the plants and/or flowers contained therein and the space available in the environment in which the flower holder structure is placed and where it can be easily transferred from one position to another due to the possibility of mounting on wheels of the framework thereof. Lastly, the use of saucers as structural elements for connection between the walls makes the framework stiff conferring to the flower holder structure an ideal stability without requiring additional stiffening components.

## Claims

1. A flower holder structure **characterised in that** it comprises at least two assemblies (20) each formed by a pot (20b) and saucer (20a) and arranged at different heights and in a laterally staggered manner on a support framework (11) which is reversibly coupled to said assembly through the respective saucers so as to provide a substantially "terrace" or "steps" stiff configuration.

2. The flower holder structure according to claim 1, wherein said support framework (11) comprises at least two substantially triangular-shaped parallel walls (13) with at least one inclined side (13b) along which said saucers (20a) are reversibly fixed.

3. The flower holder structure according to claim 1 or 2, wherein said support framework (11) also comprises a common base (12) on which said walls (13) are reversibly fixed.

4. The flower holder structure according to any one of the preceding claims, wherein brackets (19a, 19b) extend from the inclined side (13b) of each of said walls (13), said brackets being two-by-two aligned horizontally to form the support for said assemblies (20).

5. The flower holder structure according to claim 3, wherein a further assembly (30) formed by a pot (30b) and saucer (30a) is reversibly fixed to said base (12) parallel to said at least two assemblies (20).

6. The flower holder structure according to any one of the preceding claims, wherein an interspace (27, 37) for collecting water is defined between each pot (20b, 30b) and saucer (20a, 30a).

7. The flower holder structure according to claim 6, wherein an opening (29, 39) communicating with said water interspace (27, 37) is provided on one side of each assembly (20, 30).

8. The flower holder structure according to any one of the preceding claims, wherein a first side (13a) and a third side (13c), perpendicular to each other, extend from the ends of said inclined side (13b) of each of said walls (13), the first side (13a) forming the support interface with the base (12) of the framework (11).

9. The flower holder structure according to any one of the preceding claims, wherein said walls (13) are fixed to the base (12) so that a front portion of the base, on which said further pot/saucer assembly (30) is fixed, is left free.

10. The flower holder structure according to any one of the preceding claims, wherein reversible coupling means (21, 22, 23, 24, 31, 32, 33, 34, 15a, 15b, 16a, 16b, 17a, 17b, 18a, 18b) are provided between said assemblies (20, 30) and said brackets (19a, 19b) or said base (12) and between said walls (13) and said base (12).

11. The flower holder structure according to claim 10, wherein said reversible coupling means comprise centring projections (15a, 15b, 21, 31) and respective elastically deformable snap-teeth (17a, 17b, 23, 33).

12. The flower holder structure according to any one of the preceding claims, wherein said pot/saucer assemblies (20, 30) have at least one housing (40) for positioning the lower end of a corresponding support rod (41) for binding the plants planted in the pot.

13. The flower holder structure according to claim 12, wherein said housing (40) is tubular and it is made on the bottom of the saucer (20a, 30a), while, at an overlying position, at the bottom of the pot (20b, 30b), a corresponding tubular passage (42) for the support rod (41) is formed aligned to said housing.

14. The flower holder structure according to any one of the preceding claims, wherein wheels (14) are associated to said framework (11) to allow movement thereof.
